# EUROPEAN PATENT SPECIFICATION

(11) **EP 1 564 736 B1**
(45) Date of publication and mention of the grant of the patent: **21.05.2008**
(21) Application number: 05002282.1
(22) Date of filing: 03.02.2005
(51) Int. Cl.: G11B 19/04, G11B 5/09, G11B 7/004

(54) **Method for recording data with protection against adjacent track erasure and storage medium therewith**
Verfahren zur Aufzeichnung von Daten mit Schutz gegen Löschen der angrenzenden Spuren und Speichermedium damit
Méthode d'enregistrement de données avec protection contre l'effacement de pistes adjacentes et support d'enregistrement contenant cette méthode

(30) Priority: 16.02.2004 KR 2004009948
(43) Date of publication of application: 17.08.2005
(73) Proprietor: SAMSUNG ELECTRONICS CO., LTD., Suwon-si, Gyeonggi-do (KR)
(72) Inventor: Jeong, Seung-youl, Taean-eub Hwaseong-si Gyeonggi-do (KR); Park, Jong-Iak, Yeongtong-dong Suwon-si Gyeonggi-do (KR); Cho, Sung-youn, Dobong-gu Seoul (KR)
(74) Representative: Grünecker, Kinkeldey, Stockmair & Schwanhäusser Anwaltssozietät

(56) References cited:
- EP-A- 1 569 220
- EP-A1- 0 114 255
- EP-A2- 1 457 981

## Description

The present invention relates to a recording method of a storage medium in which data is recorded in a track, and more particularly, to a method for recording data capable of preventing an adjacent track erase and a storage medium on which a program for executing the method is recorded.

A hard disk drive is a recording apparatus for reading and recording information. The information is generally recorded on concentric tracks disposed on a surface of at least one magnetic disk. The disk is rotatably loaded on a spindle motor, and the information is accessed by a reading and/or writing device mounted on an actuator arm rotated by a voice coil motor. The voice coil motor receives an electric current to rotate the actuator, thereby shifting a reading and/or writing head. The reading and/or writing head detects a change of a magnetic field radiated from a surface of the disk to read the information recorded on the surface of the disk. In order to record the information on a data track, an electric current is fed to the head. The electrical current generates the magnetic field to magnetize the surface of the disk.

A recording density may be increased by shortening a distance between the reading and/or writing head and the disk. To this end, a size of the reading and/or writing head is reduced, and the reading and/or writing head is positioned as close as possible to the disk. However, if a distance between the reading and/or writing head and the disk is shortened, when data is recorded in a track, the adjacent track is overwritten by the magnetic field generated by the reading and/or writing head, so that the data recorded in the adjacent tracks may be erased.

Such a phenomenon is referred to as ATE, and a degree of the ATE may be determined by repeatedly recording data in the tracks adjacent to a target track for a predetermined time and measuring a bit error rate produced at the data recorded in the target track. Such a method evidences that if the data is repeatedly recorded in any track, data recorded in tracks adjacent to the track may be erased.

For example, a file allocation table (FAT) is renewed in the hard disk drive whenever the data is recorded. Accordingly, the more times the file allocation table is renewed, the more completely the data in the track adjacent to the track in which the FAT is located is erased or corrupted.

Meanwhile, in personal video recorders (PVRs), if the data is continuously and repeatedly recorded in an allocated section to realize a trick play function, the data recorded in a track adjacent to the allocated section may be erased.

Such a phenomenon in that the data recorded in the tracks adjacent to any track repeatedly recorded is erased may often occur in storage media which record the data in units of tracks, such as a floppy disk, CD-R, DVD-R, magneto optical disk, hard disk or the like, as well as the hard disk drive. The CD-R and DVD-R, by which the data is optically recorded, are less influenced relative to the floppy disk, the magneto optical disk and hard disk, but is not free from the influence of the ATE.

EP-A-1 569 220 relates to an automatic data update method for a data storage system and a disc drive using the same. The described technique includes the counting of a number of times a write mode is executed in tracks adjacent to each track of a storage medium, reading data stored in one of the tracks of the storing medium when the number of times the write mode is executed in any tracks adjacent to one of the tracks exceeds a specified threshold value and rewriting the read data to one of the tracks.

It is the object of the present invention to provide a method of recording data in a storage medium in which the data is recorded in unit of track, by which when the data is repeatedly recorded in any track, the data recorded in a track adjacent to the track is not erased is provided.

This object is solved by the subject matter of the independent claims.

Preferred embodiments are defined by the subject matter of the dependent claims.

In an aspect of the present invention, a storage medium to be read by a computer to execute the data recording method to minimize ATE is provided.

According to another aspect of the present invention, there is provided a method of recording data in a storage medium in which a data is recorded in units of tracks having at least one sector, the method including accumulating and computing the number of times the data is recorded in the sector; determining whether the accumulated number of times exceeds a predetermined number of times; and rewriting the data, which is recorded in regions adjacent to the region, in the regions, if the accumulated number of times exceeds the predetermined number of times.

According to another aspect of the present invention, there is provided a computer-readable storage medium storing a program for executing a method of recording data in a storage medium in which a data is recorded in units of tracks having at least one sector, the method including accumulating and computing the number of times the data is recorded in the sector; determining whether the accumulated number of times exceeds a predetermined number of times; and rewriting the data, which is recorded in regions adjacent to the region, in the regions, if the accumulated number of times exceeds the predetermined number of times.

With the present invention, the number of times data is recorded is accumulated to record data in a specific region. If the number of times exceeds a predetermined number, the data is rewritten, thereby minimizing the influence of the ATE.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a schematic view of one example of a hard disk drive;
FIG. 2 is a block diagram depicting an electric system controlling the hard disk drive shown in FIG. 1;
FIG. 3 is a schematic view depicting a data recording method according to an embodiment of the present invention;
FIG. 4 is a flow chart depicting a data recording method according to an embodiment of the present invention; and
FIG. 5 is a block diagram depicting a construction of a personal video recorder (PVR) to which the data recording method embodiments of FIGS. 3-4 are applied.

Reference will now be made in detail to the embodiments of the present invention, examples of which are illustrated in the accompanying drawings, wherein like reference numerals refer to the like elements throughout. The embodiments are described below to explain the present invention by referring to the figures.

A personal video recorder (PVR), sometimes called as digital video recorder (DVR), refers to a product built in a hard disk drive (HDD) to write and/or read a currently broadcasting digital video stream in real time.

Providing the PVR with the hard disk drive, the PVR can store digital audio/video information in a different way from a tape for a conventional analog VCR. Even though writing and/or reading operations are repeatedly performed, the quality of images is preserved without any loss.

A key technique of the PVR is a streaming process to freely record and playback the broadcasting stream by use of high-capacity and high-speed HDD. Moving pictures such as MPEG-2 have a continuous-time function, and a random writing/reading property, like an HDD, is far superior relative to other storage media. Accordingly, even though the PVR is restricted by mechanical properties, such as track positioning of disk heads, real-time storage and playback of moving pictures may be sufficiently secured.

One of the functions realized by the PVR is a time-shift recording function, by which broadcasting contents are recorded at a present time and then the recorded contents will be played back at some time in the future. For example, in the case where a person talks over a telephone while seeing and hearing TV, the broadcasting contents are recorded, and then the recorded contents, which the person did not watch, are played back after talking over the telephone.

Such a time-shift recording function is similar to a recording function, except that the time-shift recording function is continuously performed and the recorded contents are automatically erased after a determined time to record new contents. In other words, according to the time-shift recording function, a specific region of the hard disk drive is allocated for the time-shift recording, and a broadcasting signal is continuously recorded in the time-shift recording region. If the contents are recorded in the last section of the region allocated for the time-shift recording, the recording begins at the beginning of the region. Accordingly, the time-shift recording function serves a backup function of an image signal of a constant period.

Generally, a PVR's user allocates a predetermined region for the time-shift recording function, so that the time-shift recording function is continuously performed during the operation of the PVR. The region allocated for the time-shift recording function in the hard disk drive is continuously and repeatedly recorded with the data, and thus the data recorded in the region adjacent to the allocated region may be erased under the influence of the ATE.

In accordance with an aspect, the influence of the ATE is prevented by computing the number of times data is recorded in any region, and rewriting the data in regions adjacent to the region if the number of times exceeds a predetermined number at which the data is influenced by the ATE.

Such a method can be effectively utilized in the region in which recording operations are performed more often, such as in a region for a time-shift recording function or FAT.

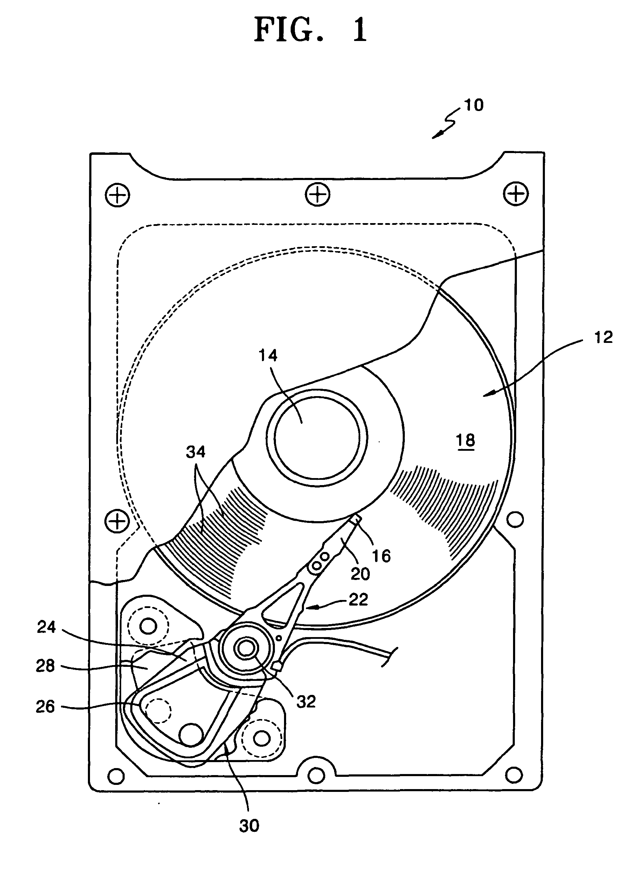

FIG. 1 is a schematic view of one example of a hard disk drive. Referring to FIG. 1, a hard disk drive 10 includes a disk 12 rotated by a spindle motor 14, and a head 16 to access the disk 12, moving at a predetermined interval from a surface 18 of the disk 12.

The disk 12 is rotated by the spindle motor 14, and the head 16 converts electrical information into magnetic information or vice versa to read or write the data from or on the disk 12. Although only one head 16 is shown in FIG. 1, a write head for converting the electrical information into the magnetic information and a read head for converting the magnetic information into electrical information are generally provided in a single member. Additionally, it is understood that hard disk drives with multiple platters or disks may be used which have multiple corresponding heads for each platter.

The head 16 may be integrated with a slider 20. The slider 20 is adapted to produce an air bearing between the head 16 and the surface 18 of the disk 12. Alternatively, the slider 20 may be integrated with a head gimbal assembly (HGA) 22. The HGA 22 is attached to an actuator arm 24 having a voice coil 26.

The voice coil 26 and a magnet assembly 28 are provided to compose a voice coil motor (VCM) 30. When an electric current is applied to the voice coil 26, a torque is generated to rotate the actuator arm 24 around a bearing assembly 32. As such, the head 16 is moved across the surface 18 of the disk 12 with the rotation of the actuator arm 24.

Information is recorded in circular tracks 34 of the disk 12. Each of the tracks 34 includes a plurality of sectors. Each of the sectors includes a user data area and a servo data area. The servo data area is recorded with a Gray Code for identifying sectors or tracks (or cylinders), a servo burst signal for controlling a head position, and the like.

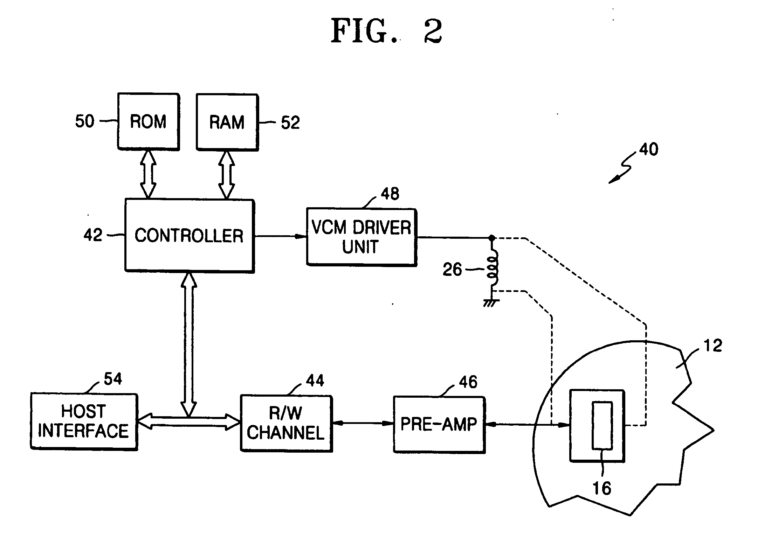

FIG. 2 is a block diagram depicting an electric system controlling the hard disk drive 10 shown in FIG. 1. The electric system 40 includes, as shown in FIG. 2, a controller 42 electrically coupled to the head 16 via a read/write (R/W) channel circuit 44 and a preamplifier circuit 46. The controller 42 may include a digital signal processor (DSP), a microprocessor, a micro-controller or the like. The controller 42 sends a control signal to the read/write channel circuit 44 to read the information from the disk 12 or write the information to the disk 12.

The information is transferred between the read/write channel circuit 44 and a host interface circuit 54. The host interface circuit 54 includes a control circuit for controlling an interface between the hard disk drive 10 and a host system, such as a personal computer, and a buffer memory for buffering the information transferred between the hard disk drive 10 and the host system.

The controller 42 is also connected to a VCM driver 48 to supply a driving current to the voice coil 26. The controller 42 sends the control signal to the VCM driver 48 to control the shift of the head 16.

The controller 42 is connected to a nonvolatile memory device, such as a ROM 50 or a flash memory device, or a RAM device 52. The memory devices 50 and 52 include commands or data used to enable the controller 42 to carry out a software routine.

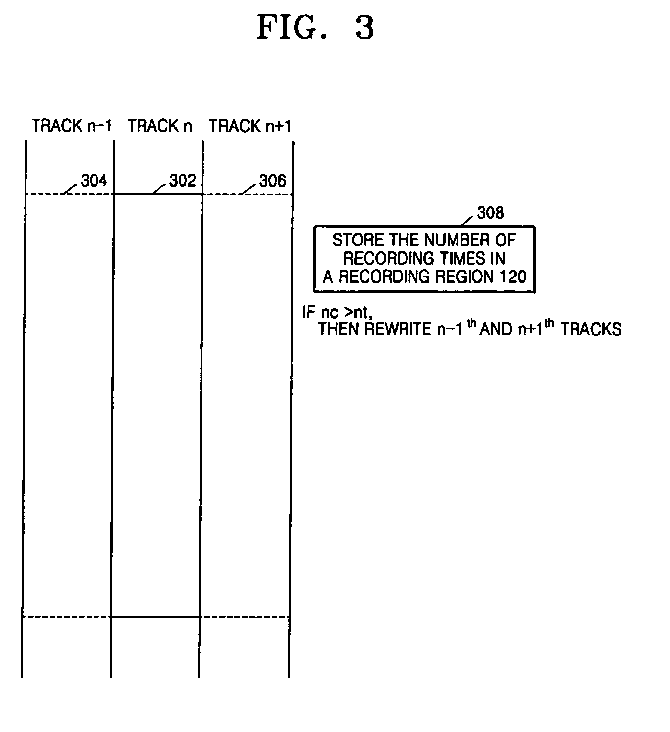

FIG. 3 is a schematic view depicting a data recording method according to an embodiment of the present invention. Referring to FIG. 3, data is continuously and repeatedly recorded in a recording region 302 of an n^{th} track. The data recorded in other recording regions 304 and 306 of n-1^{th} and n+1^{th} tracks, respectively, adjacent to the n^{th} track 302 may become more erased or corrupted as the number of times data is repeatedly recorded in the recording region 302 is increased.

Accordingly, the number of times Nc the data is recorded in the region 302 is computed, and other data is read from regions 304 and 306 adjacent to the region 302 and is rewritten in the regions 304 and 306, if the number of times Nc exceeds a predetermined number of times Nt, thereby preventing the recorded data from being erased.

In an aspect of the present invention, the recording region 302 is maintained in units of clusters. However, the recording region may also be maintained in units of logical block addressing (LBA) (i.e., in units of sectors). When maintaining the data integrity of the recording region through the LBA, however, the number of the recording regions to be managed is excessively increased, and the number of times the data is rewritten is increased, thereby causing inconvenience and increased processing resources.

In the case of the PVR, the recording region 302 is a region allocated for the time-shift recording. Even though the recording region allocated for the time-shift recording includes a plurality of tracks, the data is recorded at any time in these tracks. Embodiments of the recording method of the present invention may or may not be applied to these time-shift allocated recording region tracks. However, it is important to apply the recording method embodiments of the present invention to the tracks adjacent to the allocated time-shift recording region.

In FIG. 3, the term "region" as used herein, for convenience, should be understood to refer to, and is used interchangeably with, a track in practice. It would be understood that when analyzing the track in consideration that the data recorded in the adjacent track is erased, according to the nature of the ATE.

The number of recording times to each cluster is stored in a storage space 308 for the future, and is referenced, if necessary. Accordingly, the number of recording times to each cluster is stored in a separate storage space of the hard disk drive or host system. The storage space may be a maintenance cylinder or a flash memory in the case of the hard disk drive.

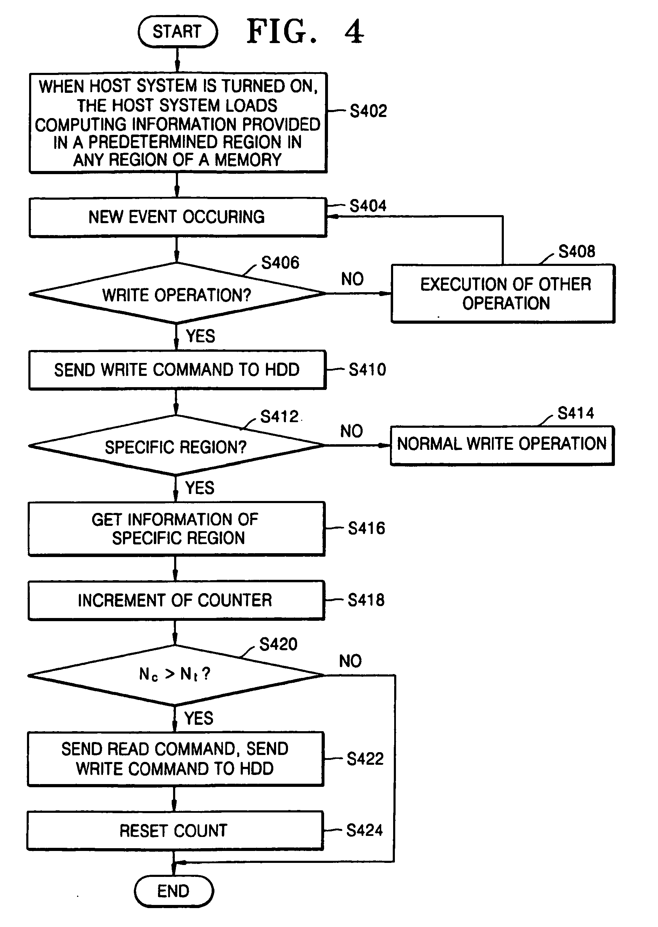

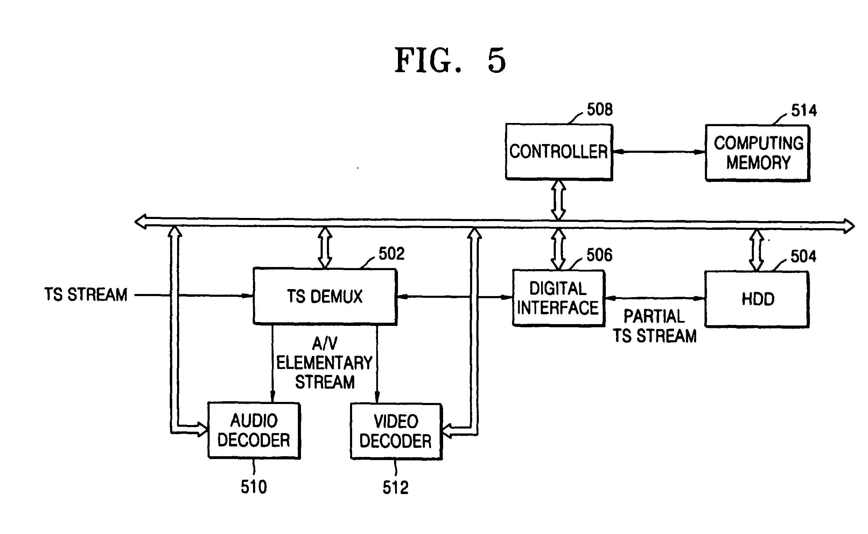

FIG. 4 is a flow chart depicting a data recording method according to an embodiment of the present invention. FIG. 4 shows an example in which recording in the region allocated for the time-shift recording in the hard disk drive is managed by the host system in the PVR. The PVR will be explained in more detail below with reference to FIG. 5.

First, when the host system is turned on, the host system loads computing information provided in a predetermined region (S402).

If a new event occurs in operation S404, whether the new event is a recording operation is determined in operation S406.

If it is determined in operation S406 that the new event is not the recording operation, another operation of the host, for example, a reproducing operation or a menu is used to select a program, is performed in operation S408, and the process is returned to operation S404 to wait for an occurrence of a new event.

If it is determined in operation S406 that the new event is the recording operation, a recording command is sent to the hard disk drive 10 in operation S410.

In operation S412, it is determined whether the predetermined region is a specific region that is easily influenced by the ATE, such as the time-shift recording region. If the predetermined region is not the specific region, a normal recording operation is performed in operation S414. In other words, the embodiments of the recording method of the present invention are not applied.

In operation S416 the computing information of the predetermined region recorded with the data is obtained.

In operation S418, a counter is incremented each time data is recorded in the specific region. For example, the number of times Nc data is recorded in the region is increased by one each time the data is recorded. In operation S420, it is determined whether the number of times Nc is larger than a predetermined number of times Nt.

If Nc is larger than Nt, the other data recorded in regions adjacent to the specific region, which is repeatedly recorded with the data such as time-shift data, is read and rewritten in the adjacent regions in operation S422. Specifically, the adjacent track information of the hard disk drive 10 is obtained from the track information of the specific region recorded with the data. Then, the PVR or host reads the data recorded in the adjacent tracks, and rewrites the data in the adjacent regions to ensure data integrity is maintained.

If the data is rewritten in the adjacent regions in operation S422, the number of times Nc on the specific region is reset in operation S424. It is understood that the method of FIG. 4 may be performed in the hard disk drive 10 or may be performed by a host system.

FIG. 5 is a block diagram depicting a construction of the PVR to which the data recording method illustrated in FIGS. 3-4 is applied.

Referring to FIG. 5, the PVR receiving, storing and playing back a digital television broadcast includes a transport stream demultiplexer (TS demux) 502 to receive a transport stream, demulitplexing program packets related to a desired program, and extracting an A/V elementary stream from the program packets, a hard disk drive (HDD) 504 storing the program packets related to the desired program to be stored, a digital interface 506 transporting and receiving a transport packet to the hard disk drive 504, a controller 508 controlling the above devices, an audio decoder 510 reproducing an audio signal from the A/V elementary stream supplied from the TS demux 502, and a video decoder 512 reproducing a video signal.

The operation of storing the desired program in the PVR in FIG. 5 will now be described in more detail.

The program packets multiplexed in the received transport stream are demultiplexed by the TS demux 502. These program packets are stored in the hard disk drive 504 via the digital interface 506.

The program packets stored in the hard disk drive 504 are input into the TS demux 502 via the digital interface 506. Such input program packets are converted into the A/V elementary stream by the TS demux 502, and the A/V elementary stream is output into the audio decoder 510 and the video decoder 512.

The controller 508 controls a process of storing the desired program in the TS demux 502, the digital interface 506 and the hard disk drive 504.

The transport stream (TS stream) comprises transport packets (TS packet) having a size of 188 bits. A type of the TS packet is identified by packet identification (PID). A program allocation table (PAT) includes the PID of the TS packet having information of a program map table (PMT), and the PMT includes the PIDs of the TS packet having audio/video information of the program.

In the operation of the time-shift recording, the controller 508 allocates a portion of the storage space of the hard disk drive 504 as the predetermined region for the time-shift recording, and stores the number of recording times on the region in a computing memory 514. For example, when all the tracks on the region for the time-shift recording are recorded with data from first to last, the number of recording times is increased by one. Alternatively, it is possible to compute the number of recording times regarding first and last tracks of the predetermined region allocated for the time-shift recording region.

The controller 508 stores the input TS stream in the hard disk drive 504, and also stores the number of recording times in the computing memory 514. In addition, the controller 508 compares the accumulated number of recording times Nc stored in the computing memory 514 with the predetermined number of times Nt, whenever the number of recording times Nc is incremented or computed, and then controls rewriting of the tracks adjacent to the time-shift recording region of the hard disk drive 504 according to the compared results as described in FIG. 4.

Aspects of the present invention may be accomplished by a method, an apparatus, a system and the like. If performed by software, the method of the present invention is necessarily implemented in code segments executing a necessary operation. Programs or code segments may be stored in a processor-readable medium, or may be sent by a computer data signal combined with a carrier wave via a transferring medium or communication network. The processor readable medium includes any medium capable of storing or sending information. Examples of the processor-readable medium are an electronic circuit, a semiconductor memory device, a ROM, a flash memory, an erasable ROM, a floppy disk, an optical disk, a hard disk, an optical fiber medium, a radio frequency (RF) network, and the like. The computer data signal includes any signal, which can be transmitted through transmission medium, such as an electronic network channel, an optical fiber, air, an electromagnetic field, an RF network, and the like.

Although a few embodiments of the present invention have been shown and described, it would be appreciated by those skilled in the art that changes may be made in these embodiments without departing from the principles of the invention, the scope of which is defined in the claims.

## Claims

1. A method of recording data in a storage medium in units of tracks having at least one sector, the method comprising:
accumulating (S418) a number of times the data is recorded in the at least one sector of a first track;
determining (S420) whether the accumulated number of times exceeds a predetermined number of times; and
rewriting (S422) the data which is recorded in adjacent tracks to the first track, if the accumulated number of times exceeds the predetermined number of times.

2. The method of recoding the data as claimed in claim 1, wherein the number of times is computed in units of the at least one sector.

3. The method of recoding the data as claimed in claim 1 or 2, wherein the storage medium is one of a hard disk drive, a floppy disk, and a magneto optical disk.

4. The method of recoding the data as claimed in claim 1 or 2, wherein the storage medium is one of a CD-R and a DVD-R.

5. The method of recoding the data as claimed in one of claims 1 to 4, wherein the number of times the data is recorded on the at least one sector of the first track is stored in a separate storage space.

6. The method of claim 3, wherein the storage medium is a hard disk drive for a personal video recorder, wherein said step of accumulating (S418) a number of times data is recorded in sectors of a track of the hard disk drive.

7. The recording method as claimed in claim 6, wherein the number of times the data is recorded on the sectors of the track is stored in a separate storage space.

8. The recording method as claimed in claim 7, wherein the separate storage space is a maintenance cylinder of the hard disk drive.

9. A computer-readable storage medium storing a program executing a method of recording data on a storage medium in units of tracks having at least one sector, the method comprising:
accumulating (S418) a number of times the data is recorded in the sector;
determining (S420) whether the accumulated number of times exceeds a predetermined number of times; and
rewriting (S422) the data, which is recorded in adjacent tracks to the track having the at least one sector, in the adjacent tracks, if the accumulated number of times exceeds the predetermined number of times.

10. The computer-readable storage medium as claimed in claim 9, wherein the number of times the data is recorded on the at least one sector of the track is stored in a separate storage space.

## Patentansprüche

1. Verfahren des Aufzeichnens von Daten in einem Speichermedium in Einheiten von Spuren, welche mindestens einen Sektor aufweisen, wobei das Verfahren umfasst:
Aufsummieren (S418) einer Anzahl die angibt, wie oft Daten in dem mindestens einen Sektor einer ersten Spur aufgezeichnet werden;
Ermitteln (S420), ob die aufsummierte Anzahl eine vorbestimmte Anzahl überschreitet; und
Wiederauffrischen (S422) der in benachbarten Spuren der ersten Spur aufgezeichneten Daten, wenn die aufsummierte Anzahl die vorbestimmte Anzahl überschreitet.

2. Verfahren des Aufzeichnens von Daten gemäß Anspruch 1, wobei die Anzahl in Einheiten des mindestens einen Sektor berechnet wird.

3. Verfahren des Aufzeichnens von Daten gemäß Anspruch 1 oder 2, wobei das Speichermedium eine Festplatte, eine Floppy-Disk und/oder eine magneto-optische Platte ist.

4. Verfahren des Aufzeichnens von Daten gemäß Anspruch 1 oder 2, wobei das Speichermedium eine CD-R oder eine DVD-R ist.

5. Verfahren des Aufzeichnens von Daten gemäß einem der Ansprüche 1 bis 4, wobei die Anzahl, die angibt, wie oft die Daten in dem mindestens einen Sektor der ersten Spur aufgezeichnet werden, in einen getrennten Speicherplatz gespeichert werden.

6. Verfahren gemäß Anspruch 3, wobei das Speichermedium eine Festplatte für einen Personal-Video-Recorder ist, wobei besagter Schritt des Aufsummierens (S418) der Anzahl in Sektoren einer Spur der Festplatte aufgezeichnet wird.

7. Aufzeichnungsverfahren gemäß Anspruch 6, wobei die Anzahl, die angibt, wie oft Daten in den Sektoren der Spur aufgezeichnet werden, in einen getrennten Speicherplatz gespeichert werden.

8. Aufzeichnungsverfahren gemäß Anspruch 7, wobei der getrennte Speicherplatz ein Verwaltungszylinder der Festplatte ist.

9. Computerlesbares Speichermedium, welches ein Programm speichert, welches ein Verfahren des Aufzeichnens von Daten auf einem Speichermedium in Einheiten von Spuren, welche mindestens einen Sektor aufweisen, ausführt, wobei das Verfahren umfasst:
Aufsummieren (S418) einer Anzahl, die angibt, wie oft Daten in dem Sektor aufgezeichnet werden;
Ermitteln (S420), ob die aufsummierte Anzahl eine vorbestimmte Anzahl überschreitet; und
Wiederauffrischen (S422) der Daten, welche in benachbarten Spuren der Spur, welcher mindestens einen Sektor hat, aufgezeichnet sind, in den benachbarten Spuren, wenn die aufsummierte Anzahl die vorbestimmte Anzahl überschreitet.

10. Computerlesbares Speichermedium gemäß Anspruch 9, wobei die Anzahl, die angibt, wie oft die Daten in dem mindestens einen Sektor der Spur aufgezeichnet werden, in einem getrennten Speicherplatz gespeichert werden.

## Revendications

1. Procédé d'enregistrement de données sur un support d'enregistrement en unités de pistes ayant au moins un secteur, le procédé comprenant les étapes consistant à :
accumuler (S418) un nombre de fois où les données sont enregistrées sur l'au moins un secteur d'une première piste ;
déterminer (S420) si le nombre de fois accumulé dépasse un nombre de fois prédéterminé ; et
réécrire (S422) les données qui sont enregistrées sur des pistes adjacentes à la première piste, si le nombre de fois accumulé dépasse le nombre de fois prédéterminé.

2. Procédé d'enregistrement de données, selon la revendication 1, dans lequel le nombre de fois est calculé en unités dudit au moins un secteur.

3. Procédé d'enregistrement de données, selon la revendication 1 ou la revendication 2, dans lequel le support d'enregistrement est un support parmi un disque dur, une disquette et un disque magnéto-optique.

4. Procédé d'enregistrement de données, selon la revendication 1 ou la revendication 2, dans lequel le support d'enregistrement est un CD-R ou un DVD-R.

5. Procédé d'enregistrement de données, selon l'une quelconque des revendications 1 à 4, dans lequel le nombre de fois où les données sont enregistrées sur ledit au moins un secteur de la première piste est enregistré dans un espace d'enregistrement séparé.

6. Procédé selon la revendication 3, dans lequel le support d'enregistrement est un disque dur pour enregistreur vidéo personnel, ladite étape (S418) accumulant un nombre de fois où des données sont enregistrées dans des secteurs d'une piste du disque dur.

7. Procédé d'enregistrement, selon la revendication 6, dans lequel le nombre de fois où les données sont enregistrées sur les secteurs de la piste est enregistré dans un espace d'enregistrement séparé.

8. Procédé d'enregistrement, selon la revendication 7, dans lequel l'espace d'enregistrement séparé est un cylindre de maintenance du disque dur.

9. Support d'enregistrement lisible par un ordinateur stockant un programme exécutant un procédé d'enregistrement de données sur un support d'enregistrement en unités de pistes ayant au moins un secteur, le procédé comprenant les étapes consistant à :
accumuler (S418) un nombre de fois où les données sont enregistrées dans le secteur ;
déterminer (S420) si le nombre de fois accumulé dépasse un nombre de fois prédéterminé ; et
réécrire (S422) les données, qui sont enregistrées dans des pistes adjacentes à la piste ayant ledit au moins un secteur, dans les pistes adjacentes, si le nombre de fois accumulé dépasse le nombre de fois prédéterminé.

10. Support d'enregistrement lisible par un ordinateur, selon la revendication 9, dans lequel le nombre de fois où les données sont enregistrées dans ledit au moins un secteur de la piste est enregistré dans un espace d'enregistremet séparé.
